# EUROPÄISCHE PATENTSCHRIFT

(11) **EP 1 886 035 B1**
(45) Veröffentlichungstag und Bekanntmachung des Hinweises auf die Patenterteilung: **17.11.2010**
(21) Anmeldenummer: 06724125.7
(22) Anmeldetag: 07.04.2006
(51) Int. Cl.: F16C 19/50, F16C 33/34, F16C 33/46, F04B 1/20

(54) **SCHRÄGSCHEIBEN-SCHWENKLAGER**
SWASH PLATE PIVOT BEARING
PALIER PIVOTANT A DISQUES OBLIQUES

(30) Priorität: 20.05.2005 DE 102005023275
(43) Veröffentlichungstag der Anmeldung: 13.02.2008
(73) Patentinhaber: Schaeffler Technologies GmbH & Co. KG, 91074 Herzogenaurach (DE)
(72) Erfinder: BECKER, Klaus, 91074 Herzogenaurach (DE); VORNEHM, Harald, 90614 Ammerndorf (DE); LORZ, Andreas, 91074 Herzogenaurach (DE)
(86) Internationale Anmeldenummer: PCT/EP2006/003185
(87) Internationale Veröffentlichungsnummer: WO 2006/122613

(56) Entgegenhaltungen:
- CH-A- 284 552
- DE-U- 1 909 845
- FR-A- 911 385
- US-A- 4 292 859
- US-A- 5 630 352
- US-A1- 2002 136 475

## Beschreibung

### Anwendungsgebiet der Erfindung

Die Erfindung betrifft nach dem Oberbegriff der nebengeordneten Ansprüche 1 und 5 ein Schrägscheiben-Schwenklager, insbesondere für eine hydraulische Axialkolbenmaschine veränderlichen Durchsatzvolumens, bei dem zwischen einer hohlzylindrischen Lagerfläche für eine Schrägscheibe in einem Gehäuse und einer zylindrischen Lagerfläche an der Schrägscheibe Wälzlager-Segmente angeordnet sind, die in bogenförmigen Käfigen gehalten sind, wobei Mittel zur Käfigsteuerung vorhanden sind, die verhindern, dass der Wälzkörper aufnehmende Käfig aus seiner im Schwenklager günstigsten Lage verrutscht.

Außerdem betrifft die Erfindung ein weiteres Schrägscheiben-Schwenklager nach dem Oberbegriff der unabhängigen Ansprüche 6 und 7.

### Hintergrund der Erfindung

Ein gattungsgemäßes Schrägscheiben-Schwenklager ist beispielsweise aus der US 5,630,352 A bekannt. Ein Mittel zur Käfigsteuerung umfasst in diesem Fall einen zweiarmigen Hebel, der am Käfig angelenkt ist.

Axialkolben-Hydraulikeinheiten mit veränderbarer Verdrängung bzw. veränderbarer Fördermenge verwenden eine schwenkbare Schrägscheibe, um die Verdrängung bzw. Fördermenge von Kolben innerhalb eines rotierenden Zylinderblocks zu steuern. Eine typische Art schwenkbarer Schrägscheiben ist die Schrägscheibe vom Wiegentyp, die über bogenförmige Wälzlager-Segmente schwenkbar in einem Gehäuse aufgenommen ist. Bei dieser bekannten Bauart ist dem Schrägscheiben-Schwenklager eine Nachführeinrichtung zugeordnet, die verhindert, dass der die Wälzkörper aufnehmende Käfig aus seinem ihm vorgegebenen Bewegungsbereich, nämlich aus seiner im Schwenklager günstigen Lage, verrutscht. Beim Fehlen einer Nachführeinrichtung ist ein solches Verrutschen möglich, weil die Wälzkörper nicht nur Rollbewegungen ausführen, sondern auch Gleitbewegungen aufgrund von schnellen Schwenkbewegungen und/oder Erschütterungen und/oder der Massenträgheit des Wälzlager-Segmentes, die zu Lageverschiebungen des Wälzlager-Segmentes führen. Hierdurch entsteht eine ungünstige Lage des oder der Lagersegmente zur Lastrichtung.

Um die Wälzlager-Segmente so anzutreiben, dass sie auf die Bewegung der Schrägscheibe ansprechen und um das gewünschte Maß mitbewegt werden, um eine richtige Rollenberührung und Last zur Verteilung sicherzustellen, sind folgende Nachführeinrichtungen bekannt:

So ist beispielsweise in der DE 25 21 312 B1 ein Schrägscheiben-Schwenklager beschrieben, das sich dadurch auszeichnet, dass an jedem Käfig ein biegeelastischer, sich etwa radial zur Krümmung des bogenförmigen Käfigs erstreckender Stab radial verschieblich und schwenkbar angelenkt ist und der Stab mit seinem einen Ende ortsfest an einer Stelle des Gehäuses schwenkbar gelagert ist und mit seinem anderen Ende an der Schrägscheibe schwenkbar und in seiner Längsrichtung verschiebbar angeordnet ist. Weitere ähnliche Nachführeinrichtungen sind in der DE 28 26 928 A1 und in der EP 0 182 354 B1 vorbeschrieben.

In einem etwas näheren Zusammenhang mit der Erfindung scheint die DE 16 53 617 C zu stehen. Beschrieben ist dort eine Nachführeinrichtung für einen Käfig eines Schrägscheiben-Schwenklagers, wobei Teile davon mit Formschlußelementen versehen sind. Dazu ist der segmentartige Käfig mit einem drehbaren Ritzel versehen, welches mit gebogenen Zahnsegmenten kämmt, die einerseits im Gehäuse und andererseits an den Seiten der Schrägscheibe mit Schrauben befestigt sind.

All diese Nachführeinrichtungen haben den gemeinsamen Nachteil, dass sie aufwendig konstruiert sind, aus vielen Bauteilen bestehen und zusätzlichen Bauraum beanspruchen. Hinzu kommt, dass die Verbindungen entweder sich quer erstreckende Vorsprünge besitzen, die sich in entsprechende Bohrungen in der Schrägscheibe und im Gehäuse erstrecken, oder Öffnungen besitzen, die auf Schwenkstiften gleiten, die sich von der Schrägscheibe und dem Gehäuse aus quer erstrecken. In beiden Fällen werden die Verbindungen eingebaut, nachdem die Schrägscheibe eingebaut wurde, wodurch eine in der Seite des Gehäuses vorgesehene Zugangsöffnung notwendig wird. Die Öffnung muß dann durch eine entfernbare Abdeckung mit einer Art Dichtung zwischen Gehäuse und der Abdeckung abgedeckt werden. Das Vorsehen der Zugangsöffnung, der Abdeckung und der Dichtung verteuert eine solche Schwenklagerung weiter.

Zwar sind mit Formschlusselementen versehene Wälzkörper an sich auch bereits bekannt, wie die US 3,938,865 zeigt. Die dort beschriebenen Mittel-Wirkungs-Zusammenhänge sind jedoch im Vergleich mit der Erfindung vollkommen andere. Die in diesem Dokument dargestellten Zylinder- bzw. Kegelrollen weisen an ihren gegenüberliegenden Enden Verzahnungen auf, um Schlupf zu vermeiden. Es ist ein altbekanntes Problem in der Wälzlagertechnik, dass in der entlastenden Zone der Reibungsschluß zwischen Innenring, Wälzkörpern und Außenring verloren geht. In dieser Zone vermindern die Wälzlager ihre Drehzahl. Bei Eintritt in die Lastzone müssen sie dann schlagartig wieder beschleunigt werden, damit der normale Abwälzvorgang ablaufen kann. Dadurch bedingt, kommt es insbesondere bei einem bestimmten Last- und Drehzahlverhältnis zu einem Verschleiß der Wälzkörper in der Last- bzw. Beschleunigungszone.

Aus der DE 1 909 845 U ist ein Rollen-Flachkäfig mit Mitteln zu seiner zwangsweisen Führung bekannt. Die Zwangsführung des Flchkäfigs ist dadurch gegeben, dass mindestens eine, einzeln in einer Käfigtasche aufgenommene und gegen Herausfallen gesicherte Rolle ein zum Zusammenwirken mit Verzahnungen in einer oberen und einer unteren Rollenlaufbahn eingerichtetes Zahnrad trägt, das in Aussparungen der die Käfigtasche begrenzenden Käfigstege hineinragt.

### Zusammenfassung der Erfindung

Ausgehend von den Nachteilen des bekannten Standes der Technik liegt der Erfindung daher die Aufgabe zugrunde, ein Schrägscheiben-Schwenklager der eingangs bezeichneten Bauart konstruktiv zu vereinfachen.

Erfindungsgemäß wird diese Aufgabe nach dem kennzeichnenden Teil von Anspruch 1 in Verbindung mit dessen Oberbegriff dadurch gelöst, dass die Käfigsteuerung in die Wälzlager-Segmente derart integriert ist, das wenigstens ein zylindrisch ausgebildeter Wälzkörper mit der hohlzylindrischen und der zylindrischen Lagerfläche formschlüssig in Eingriff steht.

Durch die formschlüssige Verbindung zwischen Wälzkörper und beiden Lagerflächen ist sichergestellt, dass der Käfig einschließlich Wälzkörper nach Einstellung der gewünschten Verschwenkung seine eingenommene optimale Lage nicht mehr ändern kann. Dieser wenigstens eine andersartig ausgebildete Wälzkörper kann auch als Steuerwälzkörper angesehen werden. In diesem Zusammenhang hat es sich als zweckmäßig erwiesen, wenn an beiden Enden des Wälzlager-Segmentes je ein solch profilierter Wälzkörper angeordnet ist. Diese können auch lastfrei gestellt derart sein, dass sie einen kleineren Durchmesser als die übrigen, nicht profilierten tragenden Wälzkörper haben. Letztendlich ist eine Wälzlagerung mit einem erhöhtem Rollwiderstand gebildet, der verhindert, dass der Käfig aus seiner günstigen Position verrutscht. Wie bereits ausgeführt, tritt diese das Verrutschen verursachende Gleitbewegung immer dann ein, wenn aufgrund von Schwenkbewegungen, Erschütterungen auftretende Kräfte auf die Wälzlagersegmente einwirken. Es ist also verhindert, dass der Käfig und die tragenden Wälzkörper aus dem Spalt zwischen Schrägscheibe und Gehäuse herauswandern und an Anschlussteilen, wie zum Beispiel Kolben oder Gleitschuhe, Schaden nehmen können. Durch die Erfindung wird das Schrägscheiben-Schwenklager auch in Fertigung und Montage wesentlich vereinfacht, da aufwendige Anordnungen zum Nachführen des Käfigs nicht mehr erforderlich sind. Es brauchen demnach keine zusätzlichen Teile gefertigt und in aufwendiger Weise mit der Schwenkwiegenlagerung verbunden werden.

Der Wälzkörper ist gemäß Anspruch 1 an beiden in axialer Richtung gegenüberliegenden Enden mit einer umlaufenden Verzahnung versehen, wobei die beiden Lagerflächen mit zugehörigen Gegenverzahnungen versehen sind. Nach dem nebengeordneten Anspruch 5 ist der Wälzkörper in seinem Mittelteil mit einer Verzahnung versehen.

Das Anbringen der den Formenschluß bildenden Verzahnung zwischen Wälzkörper und Lagerflächen ist gegenüber der Herstellung der bisher genannten Nachführeinrichtungen relativ unkompliziert und sorgt insbesondere dafür, dass eine wesentliche Platzersparnis gegenüber den bekannten und aufwendigen Nachführeinrichtungen realisiert werden kann.

Die hohlzylindrische sowie die zylindrische Lagerfläche sind durch je eine im Gehäuse und an der Schrägscheibe eingesetzte Lagerschale gebildet. Diese Lagerschalen lassen sich als Zusatzteile in einfacher Weise herstellen und sorgen dafür, dass sowohl die Schrägscheibe als auch das Gehäuse nicht mit aufwendigen Formschlusselementen zu versehen sind. Dabei hat es sich erfindungsgemäß als vorteilhaft erwiesen, wenn die Lagerschalen als Spanlosteile ausgebildet sind und zwei in axialer Richtung voneinander beabstandete Gegenverzahnungen aufweisen.

Weitere vorteilhafte Ausführungsvarianten der Erfindung sind in den Unteransprüchen beschrieben.

Nach einem zusätzlichen Merkmal der Erfindung gemäß Anspruch 2 können die Lagerschalen wenigstens an einem Ende mit je einem radial gerichteten Bord versehen sein. Dadurch ist in einfacher Weise verhindert, dass der segmentartige Käfig einschließlich der aufgenommenen Wälzkörper von den Lagerschalen in axialer Richtung abgleiten kann.

Gemäß Anspruch 3 können diese Borde mit den Gegenverzahnungen versehen sein.

In Weiterbildung der Erfindung ist nach Anspruch 4 vorgesehen, dass die Lagerschalen an ihren Umfangsenden mit radial nach innen oder radial nach außen abgewinkelten Positioniervorsprüngen versehen sind. Dadurch wird ihre unkomplizierte Verbindung mit der Schrägscheibe und mit dem Gehäuse realisiert, indem diese Positioniervorsprünge in entsprechende Ausnehmungen an der Schrägscheibe und am Gehäuse einrasten.

Im unabhängigen Anspruch 6 ist eine vollrollige Ausführung, d.h., eine ohne Käfig beschrieben. Nach dieser Erfindungsvariante sollen alle zylindrisch ausgebildeten Wälzkörper mit der hohlzylindrischen und der zylindrischen Lagerfläche in der bereits beschriebenen Art und Weise formschlüssig im Eingriff stehen. Der Vorteil liegt insbesondere darin, dass aufgrund des fehlenden Käfigs mehr Wälzkörper angeordnet werden können, so dass die Tragzahl erhöht ist. Nach dem nebengeordneten Anspruch 7, der ebenfalls eine vollrollige Ausführung beschreibt, ist der Wälzkörper im Unterschied zum Anspruch 6 in seinem Mittelteil mit einer Verzahnung versehen.

Die Erfindung wird an nachstehenden Ausführungsbeispielen näher erläutert.

### Kurze Beschreibung der Zeichnungen

Es zeigen:
- Figur 1: einen Längsschnitt durch eine erfindungsgemäße Schrägschei- benlagerung,
- Figur 2: eine vergrößerte Darstellung eines Ausschnittes aus Figur 1,
- Figur 3: eine perspektivische Darstellung einer auf der Schrägscheibe angeordneten Lagerschale mit zylindrischer Lagerfläche,
- Figur 4: eine perspektivische Darstellung einer im Gehäuse angeordneten Lagerscheibe mit hohlzylindrischer Lagerfläche,
- Figur 5: eine perspektivische Darstellung eines Segmentkäfigs,
- Figur 6: eine vergrößerte Darstellung eines formschlüssig im Eingriff ste- henden Wälzkörpers,
- Figur 7, 8: einen Ausschnitt aus einer perspektivischen Darstellung einer Schrägscheibenlagerung und
- Figur 9: einen Längsschnitt durch eine Axialkolbenmaschine nach dem bisherigen Stand der Technik.

### Ausführliche Beschreibung der Zeichnungen

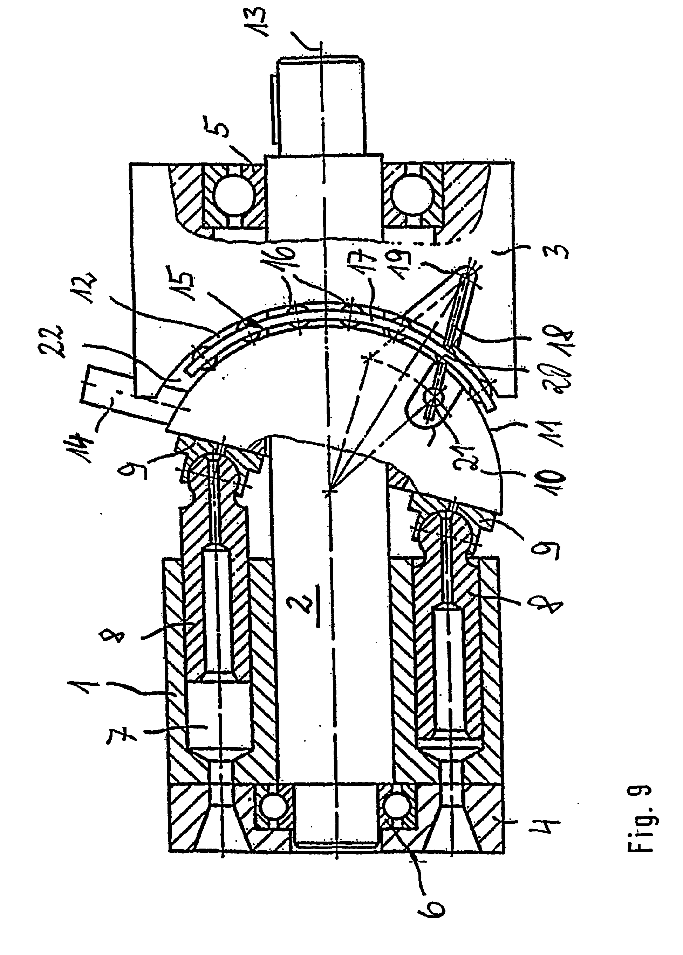

Zur Darstellung und Erläuterung des Gesamtzusammenhangs einer Schrägscheibenlagerung in Form einer Axialkolbenmaschine sei zunächst auf die Figur 9 verwiesen. Gemäß dieser besteht die Axialkolbenmaschine aus einer Zylindertrommel 1, die auf einer Welle 2 angeordnet ist, wobei die Welle 2 je nach Verwendung der Maschine als Pumpe oder als Motor Antriebswelle oder Abtriebswelle ist. Die Welle 2 ist in einem aus den Gehäuseteilen 3 und 4 bestehenden Gehäuse über Lager 5 und 6 gelagert. Innerhalb der Zylindertrommel 1 sind innerhalb von Zylinderbohrungen 7 Kolben 8 angeordnet, die sich über Gleitschuhe 9 an einer Schrägscheibe 10 abstützen. Die Schrägscheibe 10 weist eine zylindrische Lagerfläche 11 auf, die einer hohlzylindrischen Lagerfläche 12 im Gehäuseteil 3 gegenüberliegt. Beide sind durch den Lagerspalt 22 voneinander beabstandet. Der Hub der Kolben 8 in den Zylinderbohrungen 7 wird in bekannter Weise durch Veränderung der Winkelstellung der Schrägscheibe 10 gegenüber der Achse 13 der Welle 2 eingestellt. Dazu greift beispielsweise an dem fest mit der Schrägscheibe 10 verbundenen Hebel 14 eine nicht dargestellte Verstellvorrichtung an. Im Lagerspalt 22 zwischen den Lagerflächen 11 und 12 ist ein Wälzlager-Segment 15 angeordnet, dessen Wälzkörper 16 durch einen Käfig 17 geführt und gehalten werden. Von diesem beabstandet ist nicht sichtbar ein weiteres Wälzlager-Segment 15 angeordnet, so dass die Schrägscheibe 10 zweifach abgestützt ist. Die Nachführeinrichtung besteht aus einem biegeelastischen Stab 18, der im Gehäuseteil 3 an einer ortsfesten Lagerstelle 19 schwenkbar gelagert ist, an einer Lagerstelle 20 am Käfig 17 schwenkbar und in seiner Längsrichtung verschieblich gelagert ist und an der Schrägscheibe 10 an einer Lagerstelle 21 schwenkbar und in seiner Längsrichtung verschiebbar gelagert ist. Wird nun die Schrägscheibe 10 mit Hilfe des Hebels 14 in ihrer Lage verändert, so wird über den biegelastischen Stab 18 das Wälzlager-Segment 15 mitgeführt, so dass es immer eine vorteilhafte Stellung im Lagerspalt 22 einnimmt, d.h., in Kraftrichtung ausgerichtet ist. Wie bereits ausführlich im Stand der Technik beschrieben, erfordert eine solche Nachführeinrichtung einen erhöhten Herstellungs- und Montageaufwand.

Hier setzt nun die Erfindung an.

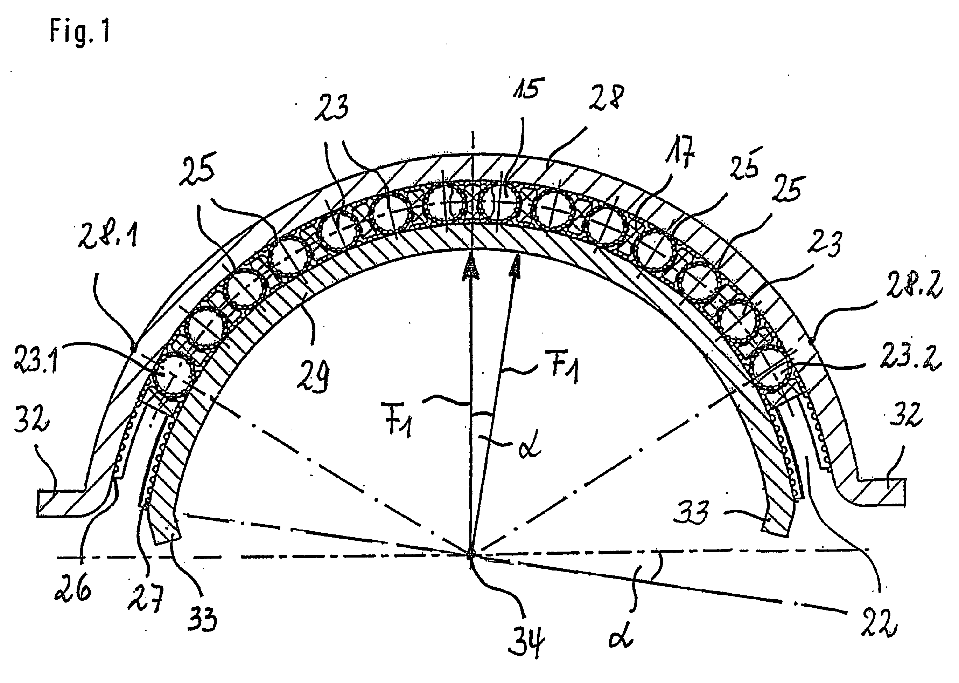

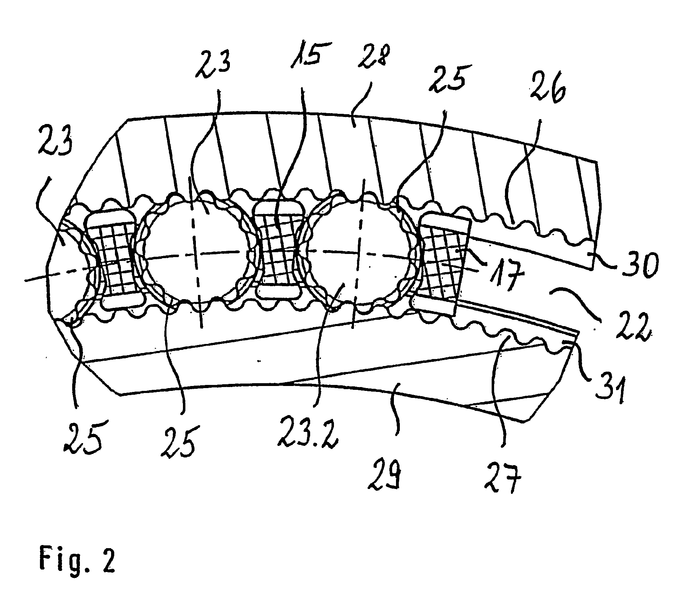

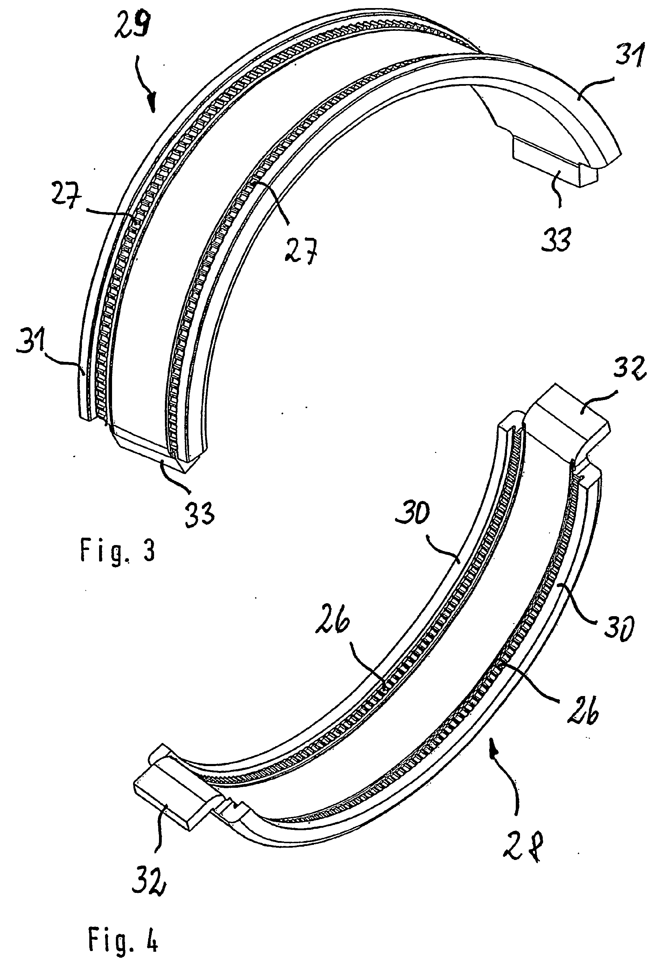

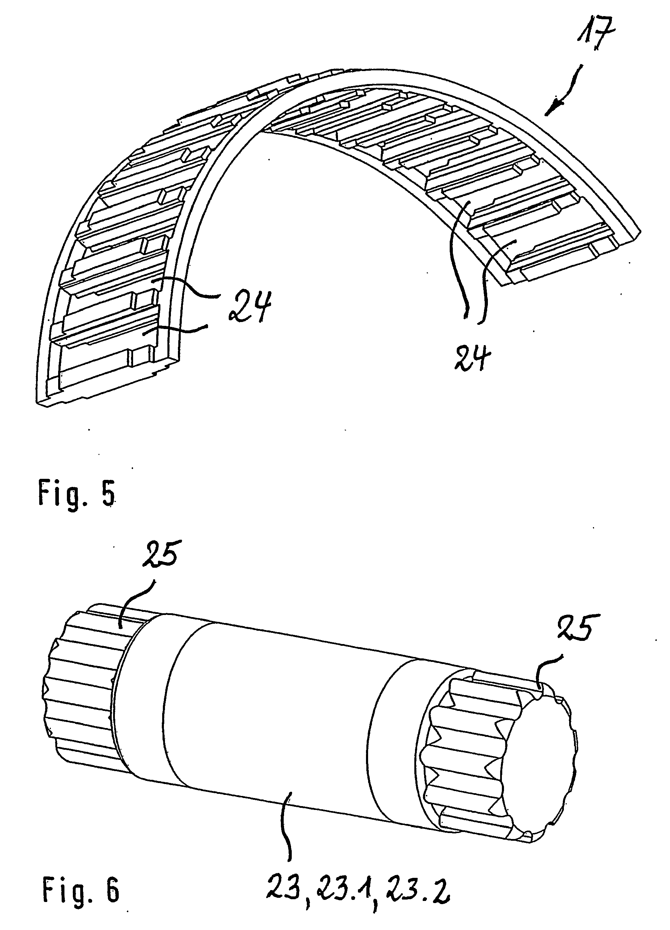

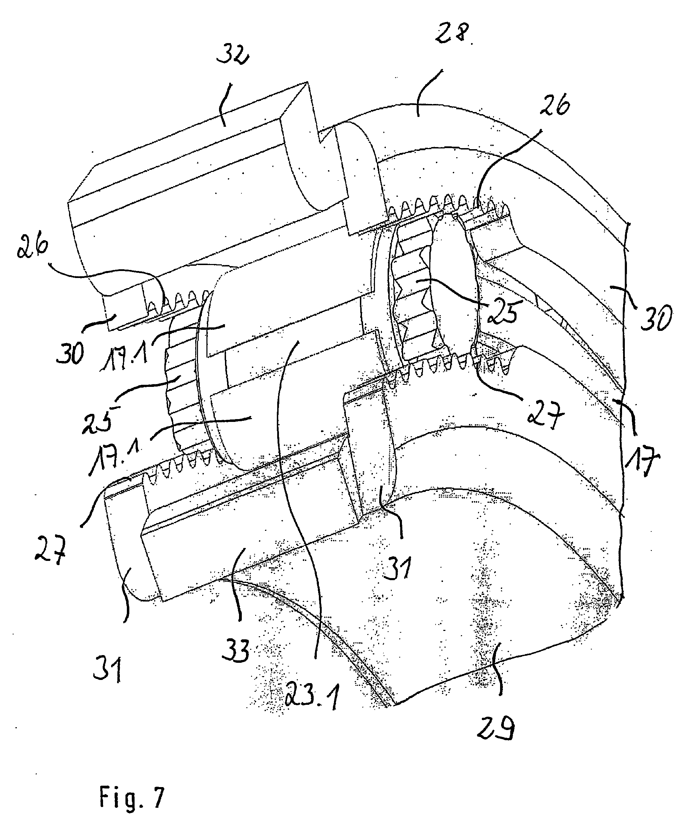

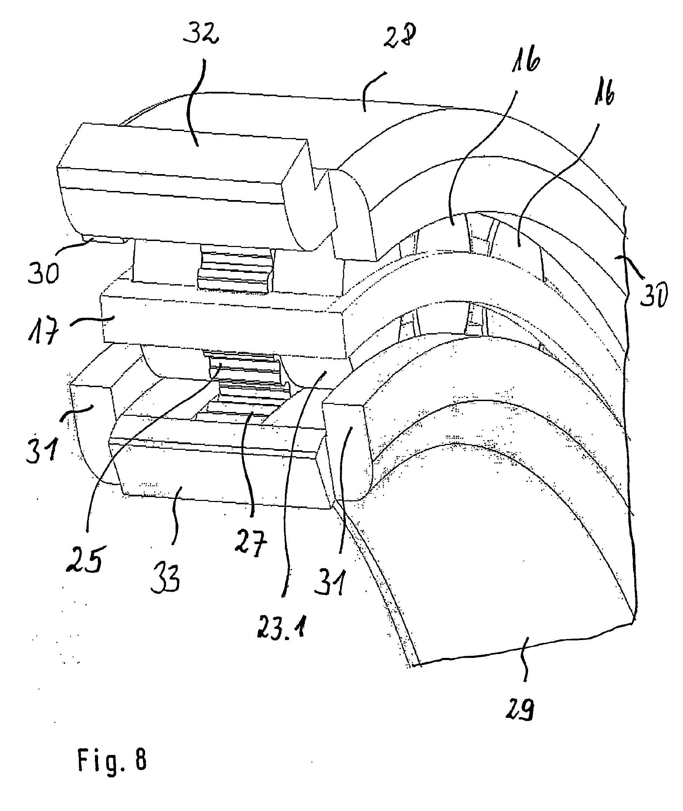

Wie aus den Figuren 1 bis 6 ersichtlich, besteht ebenso wie beim bisherigen Stand der Technik das Wälzlager-Segment 15 aus dem Taschen 24 aufweisenden Käfig 17, in dem aber im Unterschied zum Stand der Technik Wälzkörper 23, 23.1, 23.2 ausgenommen sind, die im formschlüssigen Eingriff mit der hohlzylindrischen 12 und der zylindrischen Lagerfläche 11 stehen. Gemäß Figur 6 ist der Wälzkörper 23, 23.1, 23.2 an seinen beiden gegenüberliegenden Enden mit je einer umlaufenden Verzahnung 25 versehen. Diese steht mit den zugehörigen Gegenverzahnungen 26, 27 in Eingriff, die einerseits von der Lagerschale 28 und andererseits von der Lagerschale 29 gestellt sind. Beide Lagerschalen 28, 29 sind als Spanlosteile gefertigt und weisen zwei in axialer Richtung voneinander beabstandete Gegenverzahnungen 26, 27 auf, die passend zur beidseitig angeordneten Verzahnung 25 der Wälzkörper 23, 23.1, 23.2 sind. Wie die Figuren 3 und 4 zeigen, ist die mit der Schrägscheibe 10 verbundene Lagerschale 29 beidseitig mit je einem radial nach außen gerichteten Bord 31 versehen, während die im Gehäuse 3 angeordnete Lagerschale 28 mit je einem radial nach innen gerichteten Bord 30 ausgestattet ist. Außerdem ist die Lagerschale 29 mit radial nach innen gerichteten Positioniervorsprüngen 33 versehen, während die Positioniervorsprünge 32 bei der Lagerschale 28 nach außen gerichtet sind. Die Positioniervorsprünge 33 der Lagerschale 29 rasten in nicht gezeigter Darstellung in eine Ausnehmung der Schrägscheibe 10 ein, während die Positioniervorsprünge 32 der Lagerschale 28 in ebenfalls nicht gezeigter Weise in das Gehäuseteil 3 eingerastet sind. Auf diese Weise ist eine einfache Verbindung zwischen Lagerschalen 28, 29 und Gehäuseteil 3 bzw. Schrägscheibe 10 gegeben. Im Ausführungsbeispiel gemäß der Figuren 1 bis 6 ist das Wälzlager-Segment 15 so ausgeführt, dass sämtliche im Käfig 17 angeordnete Wälzkörper als Wälzkörper 23, 23.1, 23.2 mit der umlaufenden Verzahnung 25 ausgebildet sind. Für das Funktionieren der erfindungsgemäßen Lösung brauchte das aber nur bei einem Wälzkörper zu sein, wie die Figuren 7 und 8 zeigen.

Wie Figur 7 zeigt, ist der erste Wälzkörper 23.1 und der zweite Wälzkörper 23.2, der allerdings nicht dargestellt ist, am Beginn und Ende des Wälzlager-Segmentes 15 mit der an beiden in axialer Richtung gegenüberliegenden Enden umlaufenden Verzahnung 25 versehen, die mit den Gegenverzahnungen 26, 27 formschlüssig in Eingriff steht. Wie erkennbar, sind die Gegenverzahnungen 26, 27 an den jeweiligen Borden 30, 31 der Lagerschalen 28, 29 angeordnet. Die Borde 30, 31 der Lagerschalen 28, 29 sind dabei nicht über ihre gesamte Umfangsausdehnung mit den Gegenverzahnungen 26, 27 versehen, sondern nur am Beginn und Ende des Wälzlager-Segmentes 15, so dass eine Verschwenkung um den Schwenkwinkel α realisierbar ist.

Dies in Figur 8 gezeigte Schrägscheiben-Schwenklager zeichnet sich dadurch aus, dass der Wälzkörper 23.1 in seinem Mittelteil mit der Verzahnung 25 versehen ist, die wiederum mit den Gegenverzahnungen 26, 27 formschlüssig im Eingriff steht.

Die Wirkungsweise der erfindungsgemäßen Käfigsteuerung wird nachstehend anhand von Figur 1 näher erläutert:

In der genannten Figur sind beide unter dem Punkt 34 verschwenkbar gegeneinander angeordnete Lagerschalen 28, 29 so eingestellt, dass sie gegenüber diesem eine gleiche Lage einnehmen. In dieser Position wäre allerdings eine hydraulische Axialkolbenmaschine nicht arbeitsfähig, da die mit der nicht dargestellten Schrägscheibe 10 verbundene Lagerschale 29 nicht verschwenkt ist. In diesem Fall könnten die Kolben 8 innerhalb der rotierenden Zylindertrommel 1 keine Auf- und Abbewegung in axialer Richtung ausführen, was jedoch für die Erläuterung der Erfindung unerheblich ist.

Wie die Figur 1 weiter zeigt, ist die vom Punkt 34 ausgehende Kraft F1 über ein Segment abgestützt, das linksseitig durch den Punkt 28.1 und rechtsseitig durch den Punkt 28.2 der Lagerschale 28 begrenzt ist, wobei Beginn und Ende des Segmentes durch den Mittelpunkt der zylindrischen Wälzkörper 23.1 und 23.2 verlaufen. Wird nun, wie in der Figur dargestellt, die Schrägscheibe 10 und damit die mit ihr verbundene Lagerschale 29 um den Winkel α in Umfangsrichtung gegenüber der fest angeordneten Lagerschale 28 verschoben, so bewegt sich das Wälzlager-Segment 15 um den gleichen Betrag mit, d.h., die Punkte 28.1 und 28.2 werden ebenfalls um den gleichen Betrag in Uhrzeigerichtung verschoben. Auf diese Weise ist sichergestellt, dass auch nach dem Verschwenken der Schrägscheibe 10 mit Lagerschale 29 um den Winkel α die Kraft F1 über genau das gleiche Segment abgestützt ist, allerdings um einen Betrag verschoben. Ein Herauswandern des Käfigsegmentes 15 aus dem Lagerspalt 22 durch Vibrationen und/oder Erschütterungen ist durch die formschlüssige Verbindung zwischen den Wälzkörpern 23, 23.1, 23.2 und ihren Verzahnungen 25 mit den zugehörigen Gegenverzahnungen 26, 27 der Lagerschalen 28, 29 verhindert.

### Bezugszeichen

- 1: Zylindertrommel
- 2: Welle
- 3: Gehäuseteil
- 4: Gehäuseteil
- 5: Lager
- 6: Lager
- 7: Zylinderbohrung
- 8: Kolben
- 9: Gleitschuh
- 10: Schrägscheibe
- 11: zylindrische Lagerfläche
- 12: hohlzylindrische Lagerfläche
- 13: Achse
- 14: Hebel
- 15: Wälzlager-Segment
- 16: Wälzkörper
- 17: Käfig
- 17.1: Haltevorsprung
- 18: biegeelastischer Stab
- 19: Lagerstelle
- 20: Lagerstelle
- 21: Lagerstelle
- 22: Lagerspalt
- 23: Wälzkörper
- 23.1: Wälzkörper
- 23.2: Wälzkörper
- 24: Tasche
- 25: Verzahnung
- 26: Gegenverzahnung
- 27: Gegenverzahnung
- 28: Lagerschale
- 28.1: Punkt
- 28.2: Punkt
- 29: Lagerschale
- 30: Bord
- 31: Bord
- 32: Positioniervorsprung
- 33: Positioniervorsprung
- 34: Punkt
- α: Schwenkwinkel

## Patentansprüche

1. Schrägscheiben-Schwenklager, insbesondere für eine hydraulische Axialkolbenmaschine veränderlichen Durchsatzvolumens, bei dem zwischen einer hohlzylindrischen Lagerfläche (12) für eine Schrägscheibe (10) in einem Gehäuse (3) und einer zylindrischen Lagerfläche (11) an der Schrägscheibe (10) Wälzlager-Segmente (15) angeordnet sind, die in bogenförmigen Käfigen (17) gehalten sind, wobei Mittel zur Käfigsteuerung vorhanden sind, die verhindern, dass der Wälzkörper (16) aufnehmende Käfig (17) aus seiner im Schwenklager günstigsten Lage verrutscht, **dadurch gekennzeichnet, dass**
- die Käfigsteuerung in die Wälzlager-Segmente (15) derart integriert ist, dass wenigstens ein zylindrisch ausgebildeter Wälzkörper (23, 23.1, 23.2) mit der hohlzylindrischen (12) und der zylindrischen Lagerfläche (11) formschlüssig in Eingriff steht,
- der Wälzkörper (23, 23.1, 23.2) an beiden in axialer Richtung gegenüberliegenden Enden mit einer umlaufenden Verzahnung (25) versehen ist und die beiden Lagerflächen (12, 11) mit zugehörigen Gegenverzahnungen (26, 27) versehen sind,
- die hohlzylindrische (12) und die zylindrische Lagerfläche (11) durch je eine im Gehäuse (3) und an der Schrägscheibe (10) eingesetzte Lagerschale (28, 29) gebildet sind, und
- die Lagerschalen (28, 29) als Spanlosteil ausgebildet sind und die zwei in axialer Richtung voneinander beabstandeten Gegenverzahnungen (26, 27) aufweisen.

2. Schrägscheiben-Schwenklager nach Anspruch 1, **dadurch gekennzeichnet, dass** die Lagerschalen (28, 29) wenigstens an einem axialen Ende mit je einem radial gerichteten Bord (30, 31) versehen sind.

3. Schrägscheiben-Schwenklager nach Anspruch 2, **dadurch gekennzeichnet, dass** die Gegenverzahnungen (26, 27) an den Borden (30, 31) angeordnet sind.

4. Schrägscheiben-Schwenklager nach Anspruch 1, **dadurch gekennzeichnet, dass** die Lagerschalen (28, 29) an ihren Umfangsenden mit nach außen oder nach innen abgewinkelten Positioniervorsprüngen (32, 33) versehen sind.

5. Schrägscheiben-Schwenklager nach dem Oberbegriff des Anspruchs 1, **dadurch gekennzeichnet, dass** die
- die Käfigsteuerung in die Wälzlager-Segmente (15) derart integriert ist, dass wenigstens ein zylindrisch ausgebildeter Wälzkörper (23, 23.1, 23.2) mit der hohlzylindrischen (12) und der zylindrischen Lagerfläche (11) formschlüssig in Eingriff steht,
- der Wälzkörper (23, 23.1, 23.2) an seinem Mittelteil mit einer umlaufenden Verzahnung (25) versehen ist und die beiden Lagerflächen (12, 11) mit zugehörigen Gegenverzahnungen (26, 27) versehen sind,
- die hohlzylindrische (12) und die zylindrische Lagerfläche (11) durch je eine im Gehäuse (3) und an der Schrägscheibe (10) eingesetzte Lagerschale (28, 29) gebildet sind, und
- die Lagerschalen (28, 29) als Spanlosteil ausgebildet sind und jeweils die Gegenverzahnung (26, 27) aufweisen.

6. Schrägscheiben-Schwenklager, insbesondere für eine hydraulische Axialkolbenmaschine veränderlichen Durchsatzvolumens, bei dem zwischen einer hohlzylindrischen Lagerfläche (12) für eine Schrägscheibe (10) in einem Gehäuse (3) und einer zylindrischen Lagerfläche (11) an der Schrägscheibe (10) Wälzlager-Segmente angeordnet sind, wobei Mittel zur Steuerung vorhanden sind, die verhindern, dass die Wälzkörper (16) aus ihrer im Schwenklager günstigsten Lage verrutschen, **dadurch gekennzeichnet, dass**
- alle zylindrisch ausgebildeten Wälzkörper (23, 23.1, 23.2) mit der hohlzylindrischen (12) und der zylindrischen Lagerfläche (11) formschlüssig im Engriff stehen,
- der Wälzkörper (23, 23.1, 23.2) an beiden in axialer Richtung gegenüberliegenden Enden mit einer umlaufenden Verzahnung (25) versehen ist und die beiden Lagerflächen (12, 11) mit zugehörigen Gegenverzahnungen (26, 27) versehen sind,
- die hohlzylindrische (12) und die zylindrische Lagerfläche (11) durch je eine im Gehäuse (3) und an der Schrägscheibe (10) eingesetzte Lagerschale (28, 29) gebildet sind, und
- die Lagerschalen (28, 29) als Spanlosteil ausgebildet sind und die zwei in axialer Richtung voneinander beabstandeten Gegenverzahnungen (26, 27) aufweisen.

7. Schrägscheiben-Schwenklager nach dem Oberbegriff des Anspruchs 6, **dadurch gekennzeichnet, dass** die
- alle zylindrisch ausgebildeten Wälzkörper (23, 23.1, 23.2) mit der hohlzylindrischen (12) und der zylindrischen Lagerfläche (11) formschlüssig im Engriff stehen,
- der Wälzkörper (23, 23.1, 23.2) an seinem Mittelteil mit einer umlaufenden Verzahnung (25) versehen ist und die beiden Lagerflächen (12, 11) mit zugehörigen Gegenverzahnungen (26, 27) versehen sind,
- die hohlzylindrische (12) und die zylindrische Lagerfläche (11) durch je eine im Gehäuse (3) und an der Schrägscheibe (10) eingesetzte Lagerschale (28, 29) gebildet sind, und
- die Lagerschalen (28, 29) als Spanlosteil ausgebildet sind und jeweils die Gegenverzahnung (26, 27) aufweisen.

## Claims

1. Swash plate pivot bearing, in particular for a hydraulic axial piston machine of variable throughput volume, in which anti-friction bearing segments (15) which are held in arcuate cages (17) are arranged between a hollow-cylindrical bearing face (12) for a swash plate (10) in a housing (3) and a cylindrical bearing face (11) on the swash plate (10), there being means for cage control which prevent the cage (17) which receives rolling bodies (16) from slipping out of its most favourable position in the pivot bearing, **characterized in that**
- the cage control is integrated into the anti-friction bearing segments (15) in such a way that at least one rolling body (23, 23.1, 23.2) of cylindrical configuration is in positively locking engagement with the hollow-cylindrical bearing face (12) and the cylindrical bearing face (11),
- at both ends which lie opposite one another in the axial direction, the rolling body (23, 23.1, 23.2) is provided with a circumferential toothing formation (25), and the two bearing faces (12, 11) are provided with associated mating toothing formations (26, 27),
- the hollow-cylindrical bearing face (12) and the cylindrical bearing face (11) are formed by in each case one bearing shell (28, 29) which is inserted into the housing (3) and onto the swash plate (10), and
- the bearing shells (28, 29) are configured as a part produced in a non-cutting process and have the two mating toothing formations (26, 27) which are spaced apart from one another in the axial direction.

2. Swash plate pivot bearing according to Claim 1, **characterized in that**, at least at one axial end, the bearing shells (28, 29) are provided with in each case one radially directed rim (30, 31).

3. Swash plate pivot bearing according to Claim 2, **characterized in that** the mating toothing formations (26, 27) are arranged on the rims (30, 31).

4. Swash plate pivot bearing according to Claim 1, **characterized in that**, at their circumferential ends, the bearing shells (28, 29) are provided with positioning projections (32, 33) which are angled away to the outside or to the inside.

5. Swash plate pivot bearing according to the precharacterizing clause of Claim 1, **characterized in that**
- the cage control is integrated into the anti-friction bearing segments (15) in such a way that at least one rolling body (23, 23.1, 23.2) of cylindrical configuration is in positively locking engagement with the hollow-cylindrical bearing face (12) and the cylindrical bearing face (11),
- the rolling body (23, 23.1, 23.2) is provided on its centre part with a circumferential toothing formation (25), and the two bearing faces (12, 11) are provided with associated mating toothing formations (26, 27),
- the hollow-cylindrical bearing face (12) and the cylindrical bearing face (11) are formed by in each case one bearing shell (28, 29) which is inserted into the housing (3) and onto the swash plate (10), and
- the bearing shells (28, 29) are configured as a part produced in a non-cutting process and have in each case the mating toothing formation (26, 27).

6. Swash plate pivot bearing, in particular for a hydraulic axial piston machine of variable throughput volume, in which anti-friction bearing segments are arranged between a hollow-cylindrical bearing face (12) for a swash plate (10) in a housing (3) and a cylindrical bearing face (11) on the swash plate (10), there being means for control which prevent the rolling bodies (16) from slipping out of their most favourable position in the pivot bearing, **characterized in that**
- all the rolling bodies (23, 23.1, 23.2) of cylindrical configuration are in positively locking engagement with the hollow-cylindrical bearing face (12) and the cylindrical bearing face (11),
- at both ends which lie opposite one another in the axial direction, the rolling body (23, 23.1, 23.2) is provided with a circumferential toothing formation (25), and the two bearing faces (12, 11) are provided with associated mating toothing formations (26, 27),
- the hollow-cylindrical bearing face (12) and the cylindrical bearing face (11) are formed by in each case one bearing shell (28, 29) which is inserted into the housing (3) and onto the swash plate (10), and
- the bearing shells (28, 29) are configured as a part produced in a non-cutting process and have the two mating toothing formations (26, 27) which are spaced apart from one another in the axial direction.

7. Swash plate pivot bearing according to the precharacterizing clause of Claim 6, **characterized in that**
- all the rolling bodies (23, 23.1, 23.2) of cylindrical configuration are in positively locking engagement with the hollow-cylindrical bearing face (12) and the cylindrical bearing face (11),
- the rolling body (23, 23.1, 23.2) is provided on its centre part with a circumferential toothing formation (25), and the two bearing faces (12, 11) are provided with associated mating toothing formations (26, 27),
- the hollow-cylindrical bearing face (12) and the cylindrical bearing face (11) are formed by in each case one bearing shell (28, 29) which is inserted into the housing (3) and onto the swash plate (10), and
- the bearing shells (28, 29) are configured as a part produced in a non-cutting process and have in each case the mating toothing formation (26, 27).

## Revendications

1. Palier pivotant à disques obliques, notamment pour une machine hydraulique à piston axial de débit volumique variable, dans lequel, entre une surface de palier cylindrique creuse (12) pour un disque oblique (10) dans un boîtier (3) et une surface de palier cylindrique (11) sur le disque oblique (10), sont disposés des segments de palier à roulement (15), qui sont retenus dans des cages de forme arquée, des moyens pour la commande des cages étant prévus, lesquels empêchent que la cage (17) recevant des corps de roulement (16) dérape hors de sa position la plus favorable dans le palier pivotant, **caractérisé en ce que**
- la commande des cages est intégrée dans les segments de palier à roulement (15) de telle sorte qu'au moins un corps de roulement de forme cylindrique (23, 23.1, 23.2) soit en prise par engagement par correspondance géométrique avec la surface de palier cylindrique creuse (12) et la surface de palier cylindrique (11),
- le corps de roulement (23, 23.1, 23.2) est pourvu aux deux extrémités opposées dans la direction axiale d'une denture périphérique (25) et les deux surfaces de palier (12, 11) sont pourvues de dentures conjuguées associées (26, 27),
- la surface de palier cylindrique creuse (12) et la surface de palier cylindrique (11) sont formées chacune par une coque de palier (28, 29) insérée dans le boîtier (3) et sur le disque oblique (10), et
- les coques de palier (28, 29) sont réalisées sous forme de pièces usinées sans enlèvement de copeaux, et présentent les deux dentures conjuguées (26, 27) espacées l'une de l'autre dans la direction axiale.

2. Palier pivotant à disques obliques selon la revendication 1, **caractérisé en ce que** les coques de palier (28, 29) sont pourvues à au moins une extrémité axiale d'un bord respectif (30, 31) orienté radialement.

3. Palier pivotant à disques obliques selon la revendication 2, **caractérisé en ce que** les dentures conjuguées (26, 27) sont disposées sur les bords (30, 31).

4. Palier pivotant à disques obliques selon la revendication 1, **caractérisé en ce que** les coques de palier (28, 29) sont pourvues à leurs extrémités périphériques de saillies de positionnement (32, 33) coudées vers l'extérieur ou vers l'intérieur.

5. Palier pivotant à disques obliques selon le préambule de la revendication 1, **caractérisé en ce que**
- la commande des cages est intégrée dans les segments de palier à roulement (15) de telle sorte qu'au moins un corps de roulement de forme cylindrique (23, 23.1, 23.2) soit en prise par engagement par correspondance géométrique avec la surface de palier cylindrique creuse (12) et la surface de palier cylindrique (11),
- le corps de roulement (23, 23.1, 23.2) est pourvu sur sa partie centrale d'une denture périphérique (25) et les deux surfaces de palier (12, 11) sont pourvues de dentures conjuguées associées (26, 27),
- la surface de palier cylindrique creuse (12) et la surface de palier cylindrique (11) sont formées chacune par une coque de palier (28, 29) insérée dans le boîtier (3) et sur le disque oblique (10), et
- les coques de palier (28, 29) sont réalisées sous forme de pièces usinées sans enlèvement de copeaux, et présentent à chaque fois la denture conjuguée (26, 27).

6. Palier pivotant à disques obliques, notamment pour une machine hydraulique à piston axial de débit volumique variable, dans lequel, entre une surface de palier cylindrique creuse (12) pour un disque oblique (10) dans un boîtier (3) et une surface de palier cylindrique (11) sur le disque oblique (10), sont disposés des segments de palier à roulement, des moyens de commande étant prévus, lesquels empêchent que les corps de roulement (16) ne dérapent hors de leur position la plus favorable dans le palier pivotant, **caractérisé en ce que**
- tous les corps de roulement de forme cylindrique (23, 23.1, 23.2) sont en prise par engagement par correspondance géométrique avec la surface de palier cylindrique creuse (12) et la surface de palier cylindrique (11),
- le corps de roulement (23, 23.1, 23.2) est pourvu à ses deux extrémités opposées dans la direction axiale d'une denture périphérique (25) et les deux surfaces de palier (12, 11) sont pourvues de dentures conjuguées associées (26, 27),
- la surface de palier cylindrique creuse (12) et la surface de palier cylindrique (11) sont formées chacune par une coque de palier (28, 29) insérée dans le boîtier (3) et sur le disque oblique (10), et
- les coques de palier (28, 29) sont réalisées sous forme de pièces usinées sans enlèvement de copeaux, et présentent les deux dentures conjuguées (26, 27) espacées l'une de l'autre dans la direction axiale.

7. Palier pivotant à disques obliques selon le préambule de la revendication 6, **caractérisé en ce que**
- tous les corps de roulement de forme cylindrique (23, 23.1, 23.2) sont en prise par engagement par correspondance géométrique avec la surface de palier cylindrique creuse (12) et la surface de palier cylindrique (11),
- le corps de roulement (23, 23.1, 23.2) est pourvu sur sa partie centrale d'une denture périphérique (25) et les deux surfaces de palier (12, 11) sont pourvues de dentures conjuguées associées (26, 27),
- la surface de palier cylindrique creuse (12) et la surface de palier cylindrique (11) sont formées chacune par une coque de palier (28, 29) insérée dans le boîtier (3) et sur le disque oblique (10), et
- les coques de palier (28, 29) sont réalisées sous forme de pièces usinées sans enlèvement de copeaux, et présentent à chaque fois la denture conjuguée (26, 27).
